# EUROPEAN PATENT APPLICATION

(11) **EP 2 960 694 A1**
(43) Date of publication of application: **30.12.2015**
(21) Application number: 14189112.7
(22) Date of filing: 15.10.2014
(51) Int. Cl.: G02B 6/255

(54) **Thermal bonding of optical fibres**

(30) Priority: 24.06.2014 PL 40864314
(71) Applicant: Fundacia Polskie Centrum Fotoniki Swiatlowodow, 36-060 Rogonznica (PL)
(72) Inventor: Jaroszewicz, Leszek, 05-084 Leszno (PL); Mar , Pawe, 05-120 Legionowo (PL); Nasi owski, Tomasz, 00-124 Warszawa (PL); Przybysz, Natalia, 99-335 Witonia (PL)
(74) Representative: Rumpel, Alicja

(57) **Abstract**

A method of thermal bonding of optical fibres, made of different materials, consisting of laying, equalizing, axial positioning of optical fibres with regard to one another and protection, including, at least, three steps in which:
a. optical fibres are laid, mutually equalized and axially positioned (distance d) with regard to one another,
b. the end of the optical fibre with higher melting temperature (2,1) is heated up to temperature, exceeding the melting temperature of the other optical fibre (3,4).
c. the heated end of the optical fibre with higher melting temperature is moved over towards the end of the optical fibre with lower melting temperature,
d. both fibre ends are pressed into each other to obtain their thermal bonding,
e. the spliced bond is then protected against mechanical damage.

## Description

The subject of invention is a thermal bonding method of optical fibres.

This invention finds applications in the optical fibre manufacturing industry, telecommunications, as well as in various, optical fibre-based technologies and techniques.

The publication by D. Glodge et al. "Optical fiber Telecommunications - Fiber Splicing" Ed. C.M. Millelr & A.G.Chgnoweth, New York: Academic, 1979, describes a method of thermal connection of optical silica glass fibres in which properly cut ends of the optical fibres lines to be connected are heated in a splicing arc or flame to achieve plasticity of heated end faces which are then coaxially pressed into each other to provide solid bond.

The EP 1 376 172 patent description demonstrates a bonding technique of different type optical fibres, where the diversity of types comes down merely to different diameters of the faces of connected modes. The known technique is such that the end faces of the optical fibres to be connected, following the removal of outer coatings and proper cutting, are brought in contact with each other, then the connected ends are heated, properly with mutually adjusting various diameters of the field of modes of particular optical fibres, while heating is carried out in dust-free space of cleanliness class below 1000. This helps to reduce the occurrence of fractures, caused by burning of foreign materials in linked optical fibre zones. Moreover, following the end face bonding of optical fibres, the surface of connected fibre parts is coated with a protective layer and submitted to etching process to eliminate porosity and fractures and, finally, the joints are submitted to strength tests.

In the US 6705771 patent description, a bonding technique has been described, designed for bonding fibres, made of multicomponent glass, with silica glass fibres, where the bond is obtained by heating and bringing into contact of both end faces of the optical fibres of different types, while the bond is achieved by melting the glass with an arc splicer. The method, as presented in the description, applies to traditional fibres, with gradient or incremental refractive index.

The use of arc splicer for splicing optical fibres, made of glass types with different melting temperatures, has also been known from the US 6866429 patent description, where in this method, acc. to disclosure, the optical silica fibre is cut at some angle (the surface of optical fibre, made of non-silica glass, is cut perpendicularly to fibre axis), while the surface of angularly cut fibre end face is additionally, preferably, polished.

The described methods, known from the state-of-the-art know-how, apply mainly to bonding of optical fibres, made of uniform materials and, if they are used to bond optical fibres of different types, then the differences are usually limited to mode field diameters. Meanwhile, the development of fibre optic technology has also contributed to the development of optical fibres themselves, not only of those, made of the most popular silica (in traditional optical silica fibres, the fibre jacket is made of SiO₂, while the core has got some addition of, for example, germanium oxide to increase the refractive index); but also of multicomponent glass types. Multicomponent glass types (e.g., boron-silicate, led-silicate, potassium-silicate and other), also referred to in technical jargon as "soft glasses" (with melting temperatures, depending on their composition, 1000 °C lower vs. silica glass), constitute an interesting trend in the development of fibre optic technology, among others, for their high nonlinearity index, being often even of two orders of magnitude lower than in standard silica fibre optic solutions. With higher nonlinearity indices, the generation of supercontinuum is possible at lower pulse energy on very short fibre sections (of a few millimetres). The application of multicomponent fibres for the generation of supercontinuum has also another advantage, namely that such glass types reveal much higher transmission rates in the infrared scope for waves above 2.5 µm. It can make it possible to design new broad-band sources of supercontinuum, which encompass the scope of wavelengths from 0.5 µm up to 6 µm. It is especially interesting for biomedical applications because of the vibration bands of many organic component bonds which are within the medium infrared band. The application of new broadband sources in the medium infrared scope will support the development of spectroscopy and sensor systems. Moreover, multicomponent optical fibres have also other applications, e.g., in the production of optical fibres with high numerical aperture, high double refraction or optical fibres for integrated structures.

Hence, a need has recently emerged to bond multicomponent optical fibres with silica glass types. It is a critical point in their adaptation process to measuring, laser or sensor systems, based on traditional (silica) fibres. In the current technology, any attempts to connect two different types of optical fibres failed, demonstrating an unacceptable loss levels, low mechanical strength or simply fibre joint failures. Moreover, the goal of the invention was a design of optical fibre bonding method with a filament fusion splicer, what allows for bonding of photonic crystal type, multicomponent glass (which are used, among others, for the generation of supercontinuum). The method of the present invention solves the above-mentioned technical problems.

The method of the present invention of thermal bonding of optical fibres consists of laying, equalization, axial positioning of optical fibres to one another, followed by heating and bringing in contact the opposite optical fibre end faces, which are to be connected. The method of the present invention is characterized in that it allows for bonding optical fibres, made of different material types and with different melting temperatures, where the end of connected optical fibre with higher melting temperature is heated to temperature above the melting temperature of the optical fibre with lower melting temperature, while none of the connected optical fibres may be heated to temperature higher from its own melting temperature, and then, the connected end faces of optical fibres, initially being remote from each other to a distance preferably not exceeding 100 µm, are moved towards each other with the speed from 0 µm/s to 100 µm/s and pressed against each other on the section of 0-500 µm to obtain thermal bonding of connected fibres.

Whereas it is preferable if, prior to heating of the optical fibres, their surfaces undergo chemical and/or mechanical cleaning, preferably, at least, by degreasing and contamination removal.

The term of "negative distance", as used in the description, shall be understood as the distance by which optical silica fibre, pressed to the multicomponent optical fibre, would move if the multicomponent optical fibre was taken away.

It is most preferably if the types of bonded optical fibres include a glass fibre of silica glass, with the melting temperature within 1800 - 2000 °C, and a multicomponent optical fibre, with the melting temperature within 400-1000 °C (depending on the composition of the multicomponent optical fibre). It is most preferable if the multiple optical fibre includes a fibre, made of boron-silicate glass.

It is preferable if the end of the bonded optical fibre with higher melting temperature is heated to the temperature 50-250 °C higher from the melting temperature of the optical fibre with lower melting temperature.

It is preferable if the initial distance between connected end faces of optical fibres is positive or negative and remains within the range from 5 µm to +50 µm, while the optical fibre ends are moved towards each other with the speed from 10 µm/s to 50 µm/s, most preferably with the speed from 20 µm/s to 40 µm/s and on the section from 10 µm to 100 µm long.

The method of this invention has an advantage, allowing for bonding optical fibres of silica glass and fibres of multicomponent glass types, including photonic crystal fibres (also known as microstructured fibres). Moreover, the method of this invention ensures strong and durable connections.

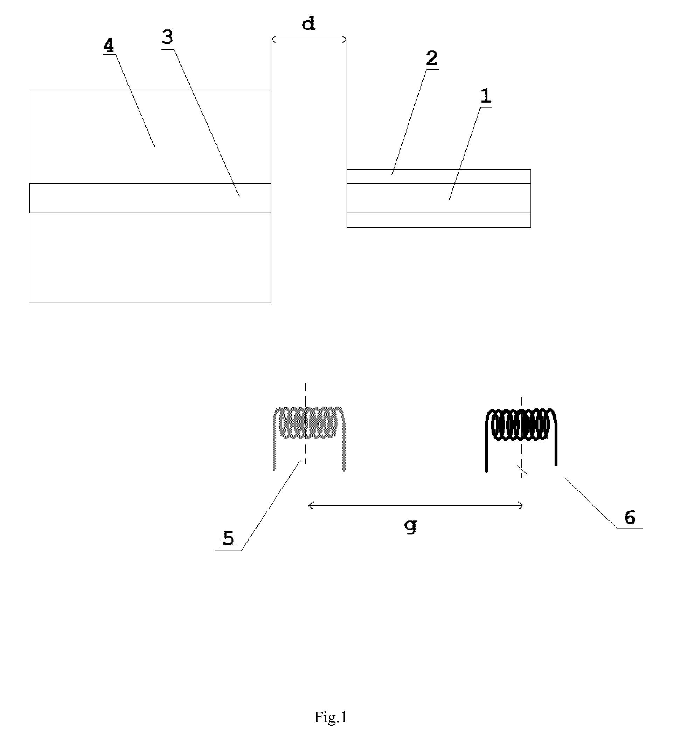

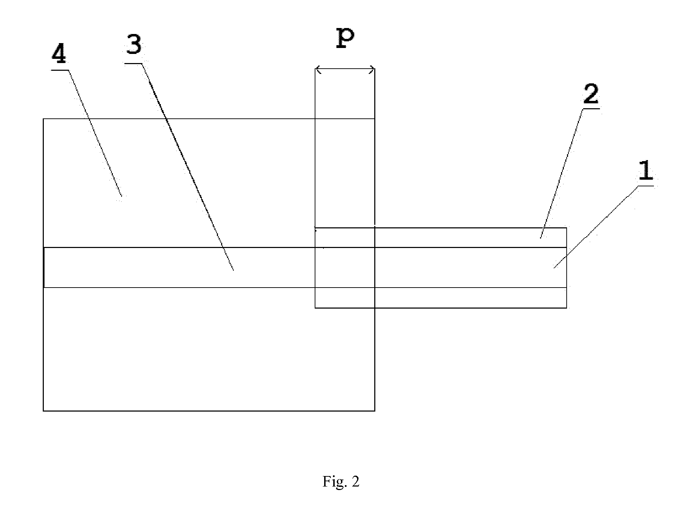

The method of the present invention to thermally bond optical fibres is demonstrated on the drawings below, where Fig. 1 presents bonded optical fibres in configuration immediately before their heating, while Fig. 2 presents a view of bonded optical fibres.

### Example 1

The method of the present invention of thermal bonding of optical fibres consists of laying, equalization, axial positioning of optical fibres to one another, followed by heating and bringing in contact the opposite optical fibre end faces, which are to be connected.

The method of the present invention of thermal optical fibre bonding was applied to connect optical fibres, out of which, one was a silica fibre and the other was made of multicomponent glass. The optical silica fibre was a commercial, single-mode, standard glass fibre of Corning SMF28e+ type, made of high silica glass, with the core diameter (1) of ϕ =8.2 µm and the jacket diameter (2) of ϕ = 125 µm, where the jacket was made of pure silica glass, while the core was made of silica glass with some Ge addition. The other optical fibre was made of boron-silica glass with the core diameter (3) of ϕ = 2.4µm and the jacket diameter (4) of ϕ = 140 µm. The melting temperature of the silica fibre was about 1800 °C, while the melting temperature of the multicomponent fibre was about 450°C.

The optical fibres to be bonded were prepared in such a way that the end tip of the silica fibre to be connected was stripped of coating with a mechanical stripper, then the stripped end was cleaned with a tissue soaked in isopropyl alcohol. The multicomponent fibre was prepared by wiping with a dry, lint-free tissue along its axis. Then, both fibres were cut in such a way that the plane of fibre end face was at right angle to its axis. The optical fibres, prepared in such a way, were then clamped in splicer fixtures, so that the end faces of the fibres to be bonded remained opposite to each other and in an initial distance of d = 8 µm, while being axially positioned for the maximum light passing from one fibre to the other. After laying and mutual equalizing of the fibres, the heating process was initiated. Heating was carried out in stages with a Filament Fusion Splicer Vytran FFS-2000.

In the first heating stage, the source of heat (5) of the splicer was moved away from the multicomponent fibre towards the glass fibre to a distance of (g) = 120 µm, so that the multicomponent was not heated, reducing the heating process to the silica fibre only. The silica fibre was heated with the shifted source of heat (6) to the temperature of about 450 °C +/- 10 °C, i.e., higher from the melting temperature of the multicomponent fibre. When the temperature was achieved, what took about 0.2 second, the silica fibre was approached with the speed of about 30 µm/s towards the multicomponent fibre on the section of about 1 µm. During that time, the silica fibre, heated above the melting temperature of the multicomponent fibre, melted the structure of the multicomponent fibre and was axially fused into the structure of the multicomponent fibre, obtaining the state of bonding between the silica glass and the multicomponent glass, where the optical multicomponent fibre made a spliced bond with the optical silica fibre.

After bonding, the joint was protected against possible hazards of damage and effects of environmental conditions, using standard, commercially available, heat-shrinkable splice protecting tubes.

The optical loss on the fibre joint, made in the example, amounted, on the average, to 2.15 ± 0.5 dB.

### Example 2

The method of the present invention of thermal bonding of optical fibres consists of laying, equalization, axial positioning of optical fibres to one another, followed by heating and bringing in contact the opposite optical fibre end faces, which are to be connected.

The method of the present invention of thermal bonding of optical fibres was applied to connect an optical fibre of multicomponent glass with slightly modified composition and a single-mode silica fibre of high numerical aperture and small mode field (Nufern UHNA4). The silica fibre had the core diameter (1) of ϕ = 2.2 µm and the jacket diameter (2) of ϕ = 125 µm, where the fibre jacket was made of pure silica glass and the core was made of glass with some addition of Ge.

The second optical fibre was made of boron-led-silica glass with the core diameter (3) of ϕ = 2.3 µm and the jacket diameter (4) of ϕ = 141 µm.

The optical fibres to be bonded were prepared in such a way that the end tip of the silica fibre to be connected was stripped of coating with a mechanical stripper, then the stripped end was cleaned with a tissue soaked in isopropyl alcohol. The multicomponent fibre was prepared by wiping with a dry, lint-free tissue along its axis. Then, both fibres were cut in such a way that the plane of fibre end face was at right angle to its axis. The optical fibres, prepared in such a way, were then clamped in splicer fixtures, so that the end faces of the fibres to be bonded remained opposite to each other and in an initial distance of d = 10 µm, while being axially positioned for the maximum light passing from one fibre to the other. After laying and mutual equalizing of the fibres, the heating process was initiated. Heating was carried out in stages with a Filament Fusion Splicer Vytran FFS-2000.

In the first heating stage, the source of heat (5) of the splicer was moved away from the multicomponent fibre to a distance of (g) = 100 µm towards the silica fibre and, simultaneously, the multicomponent fibre was heated to the temperature of about 450 °C, while the fibre of silica glass to the temperature of about 500 °C, then it was approached towards the multicomponent fibre with the speed of about 40 µm/s and on the section of about 2 µm to obtain spliced bond between the optical silica fibre and the optical multicomponent fibre.

In order to protect the spliced bond against possible damage hazards and environment all effects, properly cut metal or glass pipes are used, with a diameter higher than the diameter of the multicomponent glass fibre, glued on both ends with an adhesive agent, not introducing excessive stress on the fibres or the obtained spliced bond.

The optical loss on the spliced bond in the example amounted to 1.8 ± 0.5 dB.

## Claims

1. A method of thermal bonding of fibres, made of different materials, in particular of optical silica fibres with optical multicomponent fibres, consisting of laying, adjusting and axial positioning of optical fibres with regard to one another and in their bonding and protection, **characterized in that** it includes, at least, the steps, in which:
a. fibres are laid, equalized and axially positioned with regard to one another,
b. the end of the fibre with higher melting temperature is heated to temperature, exceeding the melting temperature of the other fibre,
c. the heated end of the fibre with higher melting temperature is approached to the end of the fibre with lower melting temperature, simultaneously heating the optical fibre with the higher melting temperature,
d. the end faces of both fibre ends are pressed into each other to obtain their thermal bonding,
e. the spliced bond is protected against mechanical damage.

2. The method of Claim 1, characteristic in that the ends of the fibres to be bonded are chemically and/or mechanically cleaned from contaminations before their fixing in the splicer and heating.

3. The method of Claim 1 or 2, characteristic in that, prior to heating, the cleaned fibre ends are placed in a splicer in a distance not exceeding 100 µm.

4. The method of Claim 1 or 2 or 3, significant in that the end of the optical fibre with higher melting temperature is heated to the temperature of 50 °C to 250 °C higher from the melting temperature of the fibre with lower melting temperature.

5. The method of Claim 1 or 2 or 3 or 4, characteristic in that, after heating of the optical fibre end with higher melting temperature, both optical fibre ends, are moved towards each other with the speed from 0 µm/s to 100 µm/s and on the section of 0-500 µm pressed into each other to achieve thermal bonding of both fibres.

6. The method of Claim 1 or 2 or 3 or 4 or 5, characteristic in that the bonded optical fibres include a glass fibre of silica glass, with the melting temperature within 1800 - 2000 °C, and a multicomponent fibre, with the melting temperature within 400-1000 °C (depending on the composition of the multicomponent fibre).

7. The method of Claim 6, characteristic in that the optical multicomponent fibre is made of boron-silicate glass,

8. The method of Claim 1 or 2 or 3 or 4 or 5 or 6 or 7, characteristic in that the initial distance between the bonded ends of optical fibres is positive or negative and is within the range from 5 µm to 50 µm, while both fibre ends are moved towards each other with speed in the range from 10 µm/s to 50 µm/s, most preferably, with speed in the range from 20 to 40 µm/s and on the section in the range from 10 µm to 100 µm.
